# EUROPEAN PATENT SPECIFICATION

(11) **EP 2 724 765 B1**
(45) Date of publication and mention of the grant of the patent: **30.05.2018**
(21) Application number: 13184528.1
(22) Date of filing: 16.09.2013
(51) Int. Cl.: B01D 53/04

(54) **CO2 Capture System**
CO2-Abscheidungssystem
Système de capture de CO2

(30) Priority: 24.10.2012 JP 2012234275
(43) Date of publication of application: 30.04.2014
(73) Proprietor: Hitachi, Ltd., Tokyo (JP)
(72) Inventor: Sato, Hiroki, Tokyo, 100-8280 (JP); Yoshikawa, Kohei, Tokyo, 100-8280 (JP); Kaneeda, Masato, Tokyo, 100-8280 (JP)
(74) Representative: Beetz & Partner mbB

(56) References cited:
- GB-A- 1 296 889
- US-A1- 2012 160 099

## Description

### BACKGROUND OF THE INVENTION

### Field of the Invention

The present invention relates to a CO₂ capture system using a CO₂ sorbent.

### Background Art

In order to suppress global warming, reduction in emission of carbon dioxide (CO₂) which has a great influence as a greenhouse gas has been demanded. As a specific method for suppressing CO₂ emission, there is known a technique for separating and recovering CO₂ using an absorbing liquid, an adsorbent, etc. As one example, a technique for adsorbing and separating a gas is disclosed in JP-A-6-91127 (PTL 1), etc. According to this invention, in order to adsorb and separate a certain specific component in a sample gas, first, the specific component is adsorbed on an adsorbent in an adsorption tower having the adsorbent placed therein, thereafter, the specific component is desorbed by heating and aerating the adsorption tower having a given amount of the specific component adsorbed thereon, thereby regenerating the adsorbent.

Most of the CO₂ capture systems using a CO₂ sorbent are not a method in which heated steam is allowed to flow therein when regenerating the CO₂ sorbent, but a method with a mechanism utilizing a difference in pressure of adsorption amount. A CO₂ capture system using a difference in CO₂ capturing amount caused by a change in pressure of a CO₂ sorbent is described in, for example, JP-A-2009-220101 (PTL 2).

In order to prevent a decrease in the gas purity of a recovered specific component, it is desired to use steam which easily enables gas-liquid separation at normal temperature as a gas to be allowed to flow. However, if a CO₂ sorbent is regenerated by allowing heated steam to flow, the steam is condensed to generate water in the form of a liquid due to contact with the CO₂ sorbent with a temperature lower than the heated steam. If the CO₂ sorbent is dipped in the condensed water, the CO₂ sorbent is eluted, and if the dissolved CO₂ sorbent is deposited somewhere in a circulating water system, the deposition may affect an instrument. For example, in the case where a combustion boiler is provided upstream of a CO₂ capture system, a solid CO₂ sorbent is deposited at the site, and the efficiency of conversion of combustion heat to steam enthalpy may be decreased. An object of the present invention is to provide a CO₂ capture system having a unit configured to reduce the possibility of contaminating a circulating water system with a CO₂ sorbent.
US 2012/160099A1 discloses a carbon dioxide separation method and apparatus with an improved CO₂ sorbent recovery.

### SUMMARY OF THE INVENTION

The invention is achieved by a CO₂ capture system as set out in the appended claims. Additional advantageous features of the present invention are claimed in the respective sub-claims.
In order to solve the above problem, for example, structures described in claims are adopted. The present application includes a plurality of units configured to solve the above problem, and one example is a CO₂ capture system, which includes a CO₂ sorbent, a CO₂ absorption tower having the CO₂ sorbent encapsulated therein, and a channel for recovering water condensed in the CO₂ absorption tower to a circulating water system, and which uses steam gas for regenerating the CO₂ sorbent, wherein a unit configured to reduce the outflow of the CO₂ sorbent to the circulating water system is provided.

According to the present invention, when condensed water generated from steam flowing in the CO₂ absorption tower is returned to the circulating water system, the possibility of dissolving the CO₂ sorbent in the condensed water and contaminating the circulating water system with the CO₂ sorbent can be significantly reduced.

### BRIEF DESCRIPTION OF THE DRAWINGS

Fig. 1 is an overall view of a CO₂ capture system according to a first embodiment.
Fig. 2 is a view showing a swirling flow generating unit as a mist removing unit.
Fig. 3 is a view of a CO₂ sorbent with a water repellent finish.
Fig. 4 is an overall view of a CO₂ capture system according to a fourth embodiment.
Fig. 5 is an overall view of a CO₂ capture system of a first comparative example.
Fig. 6 is an overall view of a CO₂ capture system according to a fifth embodiment.

### DESCRIPTION OF THE PREFERRED EMBODIMENTS

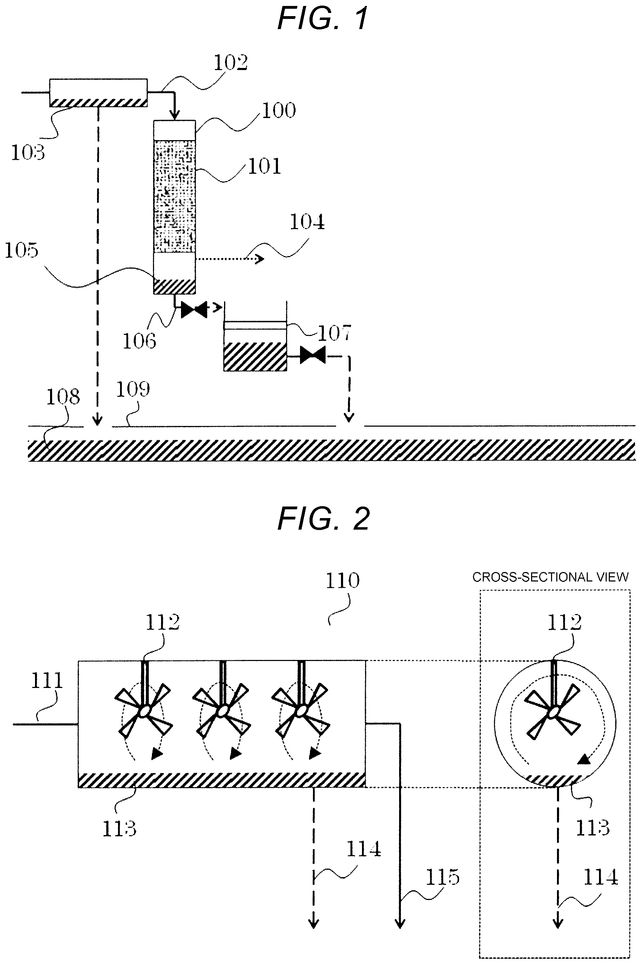

As an embodiment for carrying out the present invention, Fig. 1 shows an example of a CO₂ capture system of the present invention, and is a view showing a structure in a step of desorbing and recovering CO₂. After a step of capturing CO₂ in CO₂-containing gas by a CO₂ sorbent 101 in a CO₂ absorption tower 100, CO₂ is desorbed by allowing high-temperature steam to flow in the CO₂ absorption tower through a steam channel 102 and bringing the high-temperature steam into contact with the CO₂ sorbent to heat the CO₂ sorbent. The present invention is directed to a CO₂ capture system characterized by having a unit configured to reduce the outflow of the CO₂ sorbent to the circulating water system.

In an embodiment shown in Fig. 1, as the unit configured to reduce the elution of the CO₂ sorbent to the circulating water system, a mist removing unit 103, a water repellent finish for the CO₂ sorbent, and a CO₂ sorbent recovery filter 107 are provided. An effect is exhibited even by any one of these units, and it is also possible to provide one or more units in combination.

After removing mist in the steam by the mist removing unit 103, the steam is allowed to flow in the absorption tower 100. Water condensed in a CO₂ sorbent packed bed in the absorption tower 100 is accumulated in a condensed water pool 105 and recovered through a condensed water recovery channel 106 after completing the step of desorbing CO₂. On the surface of the CO₂ sorbent 101, a condensation reaction occurs, and therefore, by applying a water repellent finish to the CO₂ sorbent, the possibility of dissolving the CO₂ sorbent in condensed water can be reduced. After filtering the condensed water having passed through the condensed water recovery channel 106 with the CO₂ sorbent recovery filter 107, the condensed water is returned to a circulating water channel 109. In case that there is a solid component of the CO₂ sorbent dissolved in the condensed water, the component can be removed by the CO₂ sorbent recovery filter 107, and therefore, the purity of the circulating water can be maintained, and by molding the recovered component of the CO₂ sorbent, it can be used again as the CO₂ sorbent.

As the mist removing unit, for example, as shown in Fig. 2, a propeller 112 is provided in the steam channel as a swirling flow generating unit, and by a centrifugal force generated by the rotation of the propeller, water having a large particle diameter is adhered to the wall surface, and thereafter, condensed water 113 falling by the force of gravity is accumulated. After completing the step of desorbing CO₂, in which steam is allowed to flow, water derived from the removed mist can be recovered through a recovery channel 114. Further, it is also possible to reduce the humidity so that steam is less likely to be condensed by providing a moisture absorbent in the steam channel in place of the swirling flow generating unit.

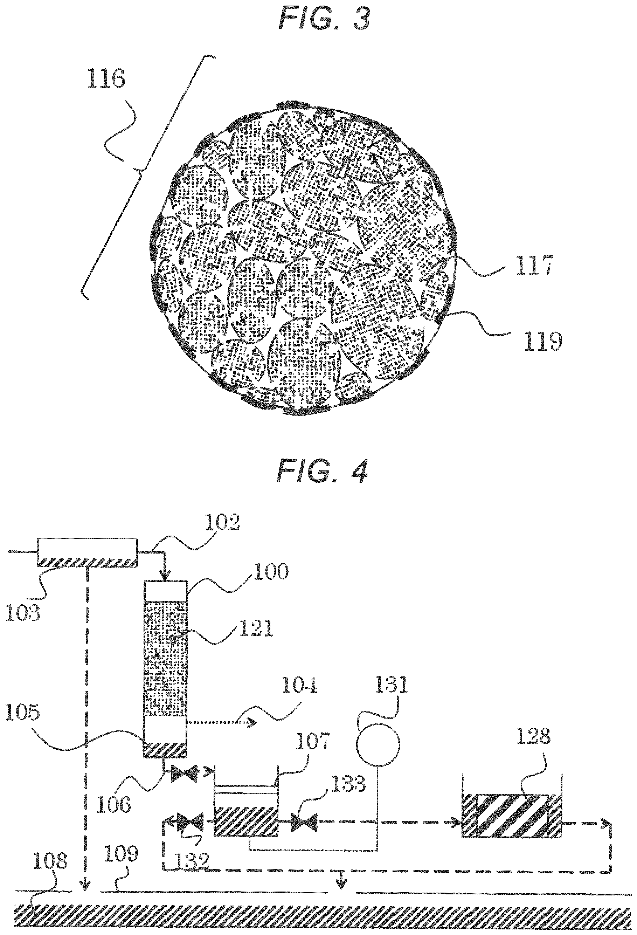

As the CO₂ sorbent to which a water repellent finish is applied, for example, a material having a high-specific surface area including silica, alumina, titania, zirconia, ceria, zeolite, a polymeric material, active carbon, MOF (Molecular Organic Framework), ZIF (Zeolitic Imidazolate Framework), or the like may be used, or a material including an oxide or a carbonate of an alkali metal or an alkaline earth metal, or the like may be used. The shape of the CO₂ sorbent may be a particle, a honeycomb, an air-permeable plate, or the like, and may be any shape as long as the CO₂ sorbent has air permeability and can allow steam to flow therethrough even if it has a shape other than the above-described shapes. As an example, Fig. 3 shows a schematic view of the CO₂ sorbent in the case where a spherical CO₂ sorbent 116 has been treated with a water repellent coating 119. Incidentally, although the drawing cannot give sufficient expression, it is assumed that while the particle diameter of a primary particle 117 of the CO₂ sorbent is several nanometers to several tens of micrometers, the particle diameter of the CO₂ sorbent 116 is about 0.5 to 100 mm, and therefore, the primary particles of the CO₂ sorbent are packed therein more densely than as shown in the illustration of the drawingBy applying a water repellent coating only to the outer surface, it is possible to prevent the CO₂ sorbent from dissolving due to wetting by the condensed water. As a water repellent coating method, an arbitrary method such as a grease-based coating (such as a wax), a resin-based coating (such as a polymer or a fluororesin), or a glass-based coating may be used, however, it is preferred to use a method with which a coating agent is hardly peeled off.

In JP-A-5-123525, an example of using hydrophobic zeolite as a CO₂ sorbent is described, however, in the structure disclosed in JP-A-5-123525, dry air is introduced when desorbing CO₂, and therefore, steam gas as disclosed in this application cannot be allowed to flow. If a water repellent finish is applied as disclosed in the present invention, in the structure in which steam is allowed to flow in the CO₂ absorption tower in the step of desorbing CO₂, any material can be used whether it is hydrophobic or hydrophilic.

In case that a metal ion constituting the CO₂ sorbent is dissolved in the condensed water filtered through the CO₂ sorbent recovery filter 107, for example, as shown in Fig. 4, by providing an adsorbent material 128 which adsorbs a CO₂ sorbent constituting metal ion, the CO₂ sorbent constituting metal ion may be captured and recovered. If the dissolved ion is a metal ion, for example, by adding a nonmetallic alkaline liquid of urea, ammonia, a basic amino acid, or the like to form a precipitate composed of the metal ion and the alkaline component, and recovery may be performed from the precipitate.

Further, a metal ion concentration measuring unit 131, which measures a metal ion concentration in the condensed water filtered through the CO₂ sorbent recovery filter 107 shown in Fig. 4, is provided, and the following procedure may be performed. Only in the case where the metal ion concentration exceeds a defined reference value, a valve 133 is opened to allow the condensed water to flow through a channel provided with the adsorbent material 128 which adsorbs a CO₂ sorbent constituting metal ion, and in the case where the metal ion concentration in the condensed water does not exceed the reference value, a valve 132 is opened and the condensed water is returned to the circulating water system as it is.

The candidate for the adsorbent material 128 which adsorbs a CO₂ sorbent constituting metal ion is, for example, zeolite, active carbon, or the like.

As a simplified method of the metal ion concentration measuring unit, there is a method for inferring the metal ion concentration from the measurement of pH of the condensed water. By using this method, the metal ion concentration can be inferred from the variation in pH, and therefore, the metal ion concentration measurement can be relatively easily performed, which leads to cost reduction.

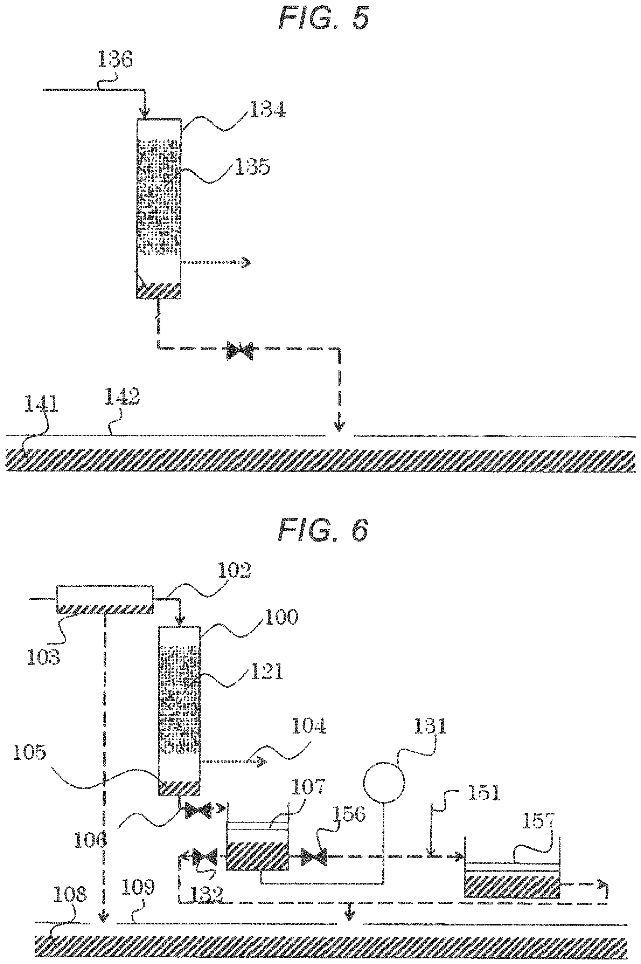

By way of comparison with the present invention, a case where any of a mist removing device, a water repellent finish for the CO₂ sorbent, and a filter for the condensed water recovery channel is not provided will be described with reference to Fig. 5.

In order to desorb CO₂ by increasing the temperature of the CO₂ sorbent 135 after completing the step of capturing CO₂ in CO₂-containing gas, steam from a steam channel 136 is brought into contact with the CO₂ sorbent 135 in an absorption tower 134. Since it is assumed that the temperature of the steam at this time is 100 to 200°C, which is higher than that of the CO₂ sorbent, condensed water in the form of a liquid is generated by a condensation reaction of steam in the CO₂ sorbent or on the inner wall of the absorption tower, the temperature of which is lower than the temperature of the steam, and extremely large condensation heat is generated. By this heat, the CO₂ sorbent is heated, whereby CO₂ can be desorbed. On the other hand, the condensed water becomes hot water, and comes in contact with a part of the CO₂ sorbent, and therefore, a part of the solid CO₂ sorbent may be dissolved after repeated use for a long period of time.

In case that the CO₂ sorbent is dissolved, in the system structure shown in Fig. 5, the condensed water containing the dissolved CO₂ sorbent is returned to the circulating water system. For example, in the case where this CO₂ capture system is provided for use in a combustion boiler, this circulating water is given combustion heat and converted into steam at a place where the circulating water goes, and therefore, the CO₂ sorbent in the form of a solid may be deposited at the place. This may cause a decrease in efficiency of conversion of combustion heat to steam enthalpy, and therefore, it is preferred to prevent this from occurring. Also in the case where the CO₂ capture system is provided in other than the combustion boiler, if circulating water is reused, the CO₂ sorbent may be deposited somewhere in the channel to affect an instrument. Further, it may result in a loss of the CO₂ sorbent itself by the outflow thereof after long-term use, and therefore, there is a possibility of decreasing the CO₂ recovery efficiency more than initially estimated after long-term use.

### First Embodiment

A CO₂ capture system shown in Fig. 1 will be described. It is a CO₂ capture system configured such that after a step of capturing CO₂ in CO₂-containing gas by a CO₂ sorbent 101 in a CO₂ absorption tower 100, CO₂ is desorbed by allowing steam with a temperature higher than that of the CO₂ sorbent 101 to flow in the CO₂ absorption tower 100 through a steam channel 102 and bringing the introduced high-temperature steam into contact with the CO₂ sorbent 101 to heat the CO₂ sorbent by the condensation heat. The desorbed CO₂ and steam are recovered through a CO₂ recovery channel 104, and then cooled and separated. On the other hand, water condensed on the CO₂ sorbent is accumulated in a condensed water pool 105 in a lower portion of the absorption tower 100 due to the flow of steam and the force of gravity. After completing the step of desorbing CO₂ by steam, a valve in a condensed water recovery channel 106 is opened, and the condensed water is recovered.

In the CO₂ capture system according to the first embodiment shown in Fig. 1, in order to prevent damage to the CO₂ sorbent due to falling of water droplets condensed in an upper portion of the CO₂ sorbent bed, or the occurrence of locally disturbed temperature distribution or the like, a mist removing unit 103 is provided upstream of the CO₂ absorption tower, thereby removing a mist component of water having a relatively large particle diameter among the steam, and thereafter, the steam is allowed to flow in the absorption tower 100. Water accumulated in the mist removing unit 103 is returned to a circulating water channel 109 as it is.

Further, in the CO₂ capture system according to the present invention shown in Fig. 1, by applying a water repellent finish or a water repellent coating to the CO₂ sorbent 101, the CO₂ sorbent 101 can be prevented from dissolving in hot water condensed on the CO₂ sorbent 101. By doing this, the condensation of steam is caused mainly on the outer surface of the CO₂ sorbent, and thus, water in the form of a liquid is prevented from penetrating into the inner portion of the CO₂ sorbent, and moreover, condensed water flowing and falling from the upper portion of the CO₂ sorbent bed is prevented from penetrating into the inner portion of the CO₂ sorbent, and thus, the dissolution of the CO₂ sorbent in the condensed water is reduced. Water condensed in the CO₂ sorbent packed bed is accumulated in the condensed water pool 105, and recovered through the condensed water recovery channel 106 after completing the step of desorbing CO₂.

Further, in the CO₂ capture system according to the first embodiment shown in Fig. 1, there is a possibility that the condensed water recovered from the condensed water pool 105 contains the slightest amount of the CO₂ sorbent 101, and therefore, the condensed water is filtered through a CO₂ sorbent recovery filter 107 provided downstream of the CO₂ absorption tower. By doing this, the water purity of the circulating water can be maintained, and also the CO₂ sorbent flowing out can be recovered and reused. The filtered condensed water is returned to the circulating water channel 109 through which the circulating water 108 flows and reused.

An effect is exhibited even by any one of the mist removing unit 103, the water repellent finish for the CO₂ sorbent, and the CO₂ sorbent recovery filter 107, which are the units configured to reduce the elution of the CO₂ sorbent to the circulating water system provided in the first embodiment, and it is also possible to perform the embodiment by combining the water repellent finish for the CO₂ sorbent with one or more of the other units mentioned above.

### Second Embodiment

Fig. 2 illustrates an embodiment in the case where as the mist removing unit provided in the CO₂ capture system described in the first embodiment, a device which separates mist having a large particle diameter from steam gas by a centrifugal force using a swirling flow generating unit is used. In a mist removing unit 110 shown in Fig. 2, a propeller 112 is provided perpendicular to the steam flowing direction, and the propeller 112 is rotated about the steam flowing direction as an axis. By doing this, as the particle diameter of the mist present in the steam is larger, a larger centrifugal force is applied to the mist, and therefore, the mist is adhered to the wall surface of the steam channel. The particle diameter of the adhered water in the form of a mist grows over time, and the water falls along the wall surface due to its own weight and is accumulated as the condensed water 113. This water contains almost no impurities, and therefore can be returned to the circulating water system through a channel 114 after completing the step of desorbing CO₂ by steam flowing.

Since it is possible to allow necessary steam to flow through a channel 115 connected to the CO₂ absorption tower by removing only water in the form of a mist which has a large particle diameter and begins to be condensed, the possibility that water droplets fall on the upper portion of the CO₂ sorbent bed is reduced, and a local variation in temperature caused thereby can be prevented. Further, water droplets generated in the upper portion of the CO₂ sorbent bed come in contact with a number of CO₂ sorbents when they move to the lower portion of the CO₂ sorbent bed, and therefore, by preventing this, the possibility of dissolving the CO₂ sorbent in water can also be significantly reduced.

### Third Embodiment

Fig. 3 is an imaginary view of a spherical CO₂ sorbent as an example of the water repellent finish applied to the CO₂ sorbent in the CO₂ capture system according to the invention. A CO₂ capturing portion of the CO₂ sorbent is a gap between the primary particles of the CO₂ sorbent and a fine pore present in the primary particle. It is not preferred that a water repellent coating component penetrates thereinto. Therefore, athe water repellent coating is applied under a high CO₂ partial pressure so that the CO₂ sorbent is brought into a state where CO₂ is captured in the CO₂ capturing portion of the CO₂ sorbent. According to this method, the water repellent coating component hardly penetrates into the inner portion of the CO₂ sorbent or the CO₂ capturing portion, and therefore, it is possible to apply the water repellent finish only to the outer surface of the CO₂ sorbent, and thus, the possibility of dissolving the outer surface of the CO₂ sorbent in condensed water can be largely reduced.

### Fourth Embodiment

A fourth embodiment shown in Fig. 4 conforms to the CO₂ capture system according to the first embodiment. In the same manner as the first embodiment, it is a CO₂ capture system configured such that after capturing CO₂ in CO₂-containing gas by a CO₂ sorbent 121 with a water repellent finish in a CO₂ absorption tower 100, CO₂ is desorbed by allowing steam with a temperature higher than that of the CO₂ sorbent 121 to flow in the CO₂ absorption tower 100 through a steam channel 102 and bringing the introduced high-temperature steam into contact with the CO₂ sorbent 121 with a water repellent finish to heat the CO₂ sorbent by the condensation heat. Further, by a mist removing unit 103, a mist component of water having a relatively large particle diameter among the steam is removed, and thereafter, the steam is allowed to flow in the absorption tower 100. The desorbed CO₂ and steam are recovered through a CO₂ recovery channel 104, and then cooled and separated. On the other hand, water condensed on the CO₂ sorbent 121 with a water repellent finish is accumulated in a condensed water pool 105 in a lower portion of the absorption tower 100 due to the flow of steam and the force of gravity. After completing the step of desorbing CO₂ by steam, a valve in a condensed water recovery channel 106 is opened, and the condensed water is recovered.

There is a possibility that the condensed water contains the slightest amount of the CO₂ sorbent, and therefore, the condensed water is filtered through a CO₂ sorbent recovery filter 107. Here, by a metal ion concentration measuring unit 131, which measures a metal ion concentration in the filtered condensed water, the metal ion concentration in the filtered condensed water is measured. If the measured concentration is lower than a defined reference value, a valve 132 for feeding the condensed water to the circulating water system is opened to return the condensed water to the circulating water system, but if the metal ion concentration is higher than the reference value, a valve 133 is opened to allow the condensed water to flow through a metal ion adsorbent material 128 which adsorbs a metal ion constituting the CO₂ sorbent, whereby the metal ion concentration in the condensed water is decreased and the condensed water is returned to a condensed water channel 109. As the metal ion adsorbent material 128, for example, an adsorbent material of zeolite, active carbon, a polymer, or the like can be used. In the case of active carbon, an adsorbent material containing carbon at 50 wt% or more is preferred.

According to this system, the dissolution of even a small amount of the CO₂ sorbent can be controlled, and therefore, the purity of the circulating water can be maintained high. In the fourth embodiment, an effect is exhibited by any one of these units configured to prevent the outflow of the CO₂ sorbent to the circulating water system including the metal ion adsorbent material in the same manner as in the first embodiment, and it is also possible to perform the embodiment by combining one or more of these units.

### Fifth Embodiment

A fifth embodiment shown in Fig. 6 conforms to the CO₂ capture system according to the first embodiment. In the fifth embodiment, in the same manner as the fourth embodiment, by a metal ion concentration measuring unit 131, which measures a metal ion concentration in filtered condensed water, the metal ion concentration in condensed water filtered through a CO₂ sorbent recovery filter 107 is measured. If the measured concentration is lower than a defined reference value, a valve 132 for feeding the condensed water to the circulating water system is opened to return the condensed water to the circulating water system, but if the metal ion concentration is higher than the reference value, a valve 156 is opened and also an alkaline liquid is allowed to flow through an alkaline liquid inflow channel 151 provided in this embodiment, the metal ion in the condensed water is precipitated. By removing this precipitate through a filter 157, also the CO₂ sorbent can be recovered. The filtered condensed water is returned to a condensed water channel 109. According also to this CO₂ capture system, the dissolution of even a small amount of the CO₂ sorbent can be controlled, and therefore, the purity of the circulating water can be maintained high.
The above embodiments of the invention as well as the appended claims and figures show multiple characterizing features of the invention in specific combinations . The skilled person will easily be able to consider further combinations or sub-combinations of these features in order to adapt the invention as defined in the claims to his specific needs.

## Claims

1. A CO₂ capture system, which comprises: a CO₂ sorbent (101), a CO₂ absorption tower (100) having the CO₂ sorbent (101) encapsulated therein, and a channel (106) for recovering water condensed in the CO₂ absorption tower (100) in a circulating water system (109), and which uses steam gas for regenerating the CO₂ sorbent (101),
wherein the system further comprises a unit (107, 103) configured to reduce the outflow of the CO₂ sorbent (101) to the circulating water system (109),
wherein as the unit configured to reduce the outflow of the CO₂ sorbent(101), a water repellent finish is applied to the CO₂ sorbent (101),
wherein the water repellent finish applied to the CO₂ sorbent is a water repellent coating (119) applied under a high CO₂ partial pressure in a state where CO₂ is captured in a CO₂ capturing portion of the CO₂ sorbent (116).

2. The CO₂ capture system according to claim 1, wherein as a further unit configured to reduce the outflow of the CO₂ sorbent, a filter (107) for recovering the eluted CO₂ sorbent is provided downstream of the CO₂ absorption tower (100).

3. The CO₂ capture system according to claim 1, wherein as a further unit configured to reduce the outflow of the CO₂ sorbent, a mist removing unit (103) is provided upstream of the CO₂ absorption tower (100).

4. The CO₂ capture system according to claim 2, wherein an adsorbent material (128) for adsorbing a metal ion in water is provided downstream of the filter (107) for recovering the eluted CO₂ sorbent.

5. The CO₂ capture system according to claim 4, wherein as the adsorbent material (128) for adsorbing a metal ion in water, an adsorbent material containing either zeolite or active carbon is used.

6. The CO₂ capture system according to claim 2, wherein a unit (156) configured to allow a nonmetallic alkaline liquid to flow in the system is provided downstream of the filter (107) for recovering the eluted CO₂ sorbent.

7. The CO₂ capture system according to claim 5 or 6, wherein a unit (131) configured to measure the concentration of a metal ion in water after filtration is provided downstream of the filter (107) for recovering the eluted CO₂ sorbent.

8. The CO₂ capture system according to claim 3, wherein as the mist removing unit (103), a device which separates mist having a large particle diameter from steam gas by a centrifugal force using a swirling flow generating unit (112) .

## Patentansprüche

1. CO₂-Abscheidesystem, das aufweist: ein CO₂-Sorptionsmittel (101), eine CO₂-Absorptionssäule, in der das CO₂-Sorptionsmittel (101) eingeschlossen ist, und einen Kanal (106), um Wasser, das in der CO₂-Absorptionssäule kondensiert ist, in einem Wasserkreislaufsystem (109) zurückzugewinnen, bei dem gasförmiger Dampf zum Regenerieren des CO₂-Sorptionsmittels (101) eingesetzt wird,
wobei das System ferner eine Einheit (107, 103) umfasst, die ausgebildet ist, ein Ausfließen des CO₂-Sorptionsmittels (101) in das Wasserkreislaufsystem (109) zu verringern,
wobei als Einheit, die zum Verringern des Ausfließens des CO₂-Sorptionsmittels (101) ausgebildet ist, eine wasserabweisende Oberflächenbehandlung auf das CO₂-Sorptionsmittel (101) aufgebracht wird, wobei es sich bei der wasserabweisenden Oberflächenbehandlung, die auf das CO₂-Sorptionsmittel aufgebracht wird, um eine wasserabweisende Beschichtung (119) handelt, die unter einem hohen CO₂-Partialdruck in einem Zustand aufgebracht wird, bei dem CO₂ in einem CO₂-Abscheidebereich des CO₂-Sorptionsmittels (116) abgeschieden wird.

2. CO₂-Abscheidesystem nach Anspruch 1, wobei als weitere Einheit, die zum Verringern des Ausfließens des CO₂-Sorptionsmittels ausgebildet ist, ein Filter (107) zur Rückgewinnung des eluierten CO₂-Sorptionsmittels stromabwärts der CO₂-Absorptionssäule (100) angeordnet ist.

3. CO₂-Abscheidesystem nach Anspruch 1, wobei als weitere Einheit, die zum Verringern des Ausfließens des CO₂-Sorptionsmittels ausgebildet ist, eine Dunstabscheidereinheit (103) stromaufwärts der CO₂-Absorptionssäule (100) angeordnet ist.

4. CO₂-Abscheidesystem nach Anspruch 2, wobei stromabwärts des Filters (107) zur Rückgewinnung des eluierten CO₂-Sorptionsmittels ein Adsorptionsmaterial (128) zum Adsorbieren eines Metallions in Wasser angeordnet ist.

5. CO₂-Abscheidesystem nach Anspruch 4, wobei als Adsorptionsmaterial (128) zum Adsorbieren eines Metallions in Wasser ein Adsorptionsmaterial verwendet wird, das entweder Zeolith oder Aktivkohle enthält.

6. CO₂-Abscheidesystem nach Anspruch 2, wobei stromabwärts des Filters (107) zur Rückgewinnung des eluierten CO₂-Sorptionsmittels eine Einheit (156) angeordnet ist, die so ausgebildet ist, dass eine nichtmetallische alkalische Flüssigkeit in dem System fließen kann.

7. CO₂-Abscheidesystem nach Anspruch 5 oder 6, wobei stromabwärts des Filters (107) zur Rückgewinnung des eluierten CO₂-Sorptionsmittels eine Einheit (131) angeordnet ist, die zum Messen der Metallionenkonzentration in Wasser nach dem Filtrieren ausgebildet ist.

8. CO₂-Abscheidesystem nach Anspruch 3, wobei die Dunstabscheidereinheit (103) eine Vorrichtung ist, die Dunstpartikel mit großem Durchmesser mittels Zentrifugalkraft unter Verwendung einer Wirbelstromerzeugungseinheit (112) von gasförmigem Dampf abtrennt.

## Revendications

1. Système de capture de CO₂, qui comprend : un sorbant de CO₂ (101), une tour d'absorption de CO₂ (100) encapsulant le sorbant de CO₂ (101), et un canal (106) pour récupérer l'eau condensée dans la tour d'absorption de CO₂ (100) dans un système d'eau en circulation (109), et qui utilise de la vapeur gazeuse pour régénérer le sorbant de CO₂ (101),
dans lequel le système comprend en outre une unité (107, 103) configurée pour réduire l'écoulement sortant du sorbant de CO₂ (101) vers le système d'eau en circulation (109),
dans lequel, en tant qu'unité configurée pour réduire l'écoulement sortant du sorbant de CO₂ (101), un apprêt hydrofuge est appliqué au sorbant de CO₂ (101),
dans lequel l'apprêt hydrofuge appliqué au sorbant de CO₂ est un enduit hydrofuge (119) appliqué sous une pression partielle de CO₂ élevée dans un état où le CO₂ est capturé dans une partie de capture de CO₂ du sorbant de CO₂ (116).

2. Système de capture de CO₂ selon la revendication 1, dans lequel, en tant qu'unité supplémentaire configurée pour réduire l'écoulement sortant du sorbant de CO₂, un filtre (107) pour récupérer le sorbant de CO₂ élué est prévu en aval de la tour d'absorption de CO₂ (100).

3. Système de capture de CO₂ selon la revendication 1, dans lequel, en tant qu'unité supplémentaire configurée pour réduire l'écoulement sortant du sorbant de CO₂, une unité d'élimination de brouillard (103) est prévue en amont de la tour d'absorption de CO₂ (100).

4. Système de capture de CO₂ selon la revendication 2, dans lequel un matériau adsorbant (128) pour adsorber un ion métallique dans l'eau est prévu en aval du filtre (107) pour récupérer le sorbant de CO₂ élué.

5. Système de capture de CO₂ selon la revendication 4, dans lequel, en tant que matériau adsorbant (128) pour adsorber un ion métallique dans l'eau, un matériau adsorbant contenant de la zéolite ou du charbon actif est utilisé.

6. Système de capture de CO₂ selon la revendication 2, dans lequel une unité (156), configurée pour permettre à un liquide alcalin non métallique de s'écouler dans le système, est prévue en aval du filtre (107) pour récupérer le sorbant de CO₂ élué.

7. Système de capture de CO₂ selon la revendication 5 ou 6, dans lequel une unité (131), configurée pour mesurer la concentration d'un ion métallique dans l'eau après filtration, est prévue en aval du filtre (107) pour récupérer le sorbant de CO₂ élué.

8. Système de capture de CO₂ selon la revendication 3, dans lequel, en tant qu'unité d'élimination de brouillard (103), un dispositif, qui sépare d'une vapeur gazeuse le brouillard ayant un grand diamètre de particule au moyen d'une force centrifuge en utilisant une unité de génération d'écoulement tourbillonnant (112), est utilisé.
